# EUROPEAN PATENT SPECIFICATION

(11) **EP 1 173 005 B1**
(45) Date of publication and mention of the grant of the patent: **09.04.2008**
(21) Application number: 00311101.0
(22) Date of filing: 13.12.2000
(51) Int. Cl.: H04N 1/64

(54) **Method and apparatus for color image data processing and compression**
Verfahren und Vorrichtung zur Farbbilddatenbearbeitung und Kompression
Procédé et appareil pour le traitement de données d'images en couleurs et la compression

(30) Priority: 28.03.2000 US 536892
(43) Date of publication of application: 16.01.2002
(73) Proprietor: OmniVision Technologies Inc., Sunnyvale, California 94086 (US)
(72) Inventor: Shan, Jizhang, Sunnyvale, CA 94087 (US); Huang, Weifeng, Santa Clara, CA 95051 (US)
(74) Representative: Hackney, Nigel John

(56) References cited:
- EP-A- 0 508 607
- EP-A- 0 907 294
- US-A- 5 734 779

## Description

The present invention relates generally to imaging methods and devices, and in particular relates to a method and apparatus for processing and compressing color images by color image sensor devices.

Current methods of color image or video compression, such as those employed with Joint Photographic Experts Group (JPEG) format, usually process data in a fully interpolated color space. Examples of these color spaces include the YUV space having a 4:2:2 ratio (where Y is a luminance component, and U and V are chrominance components or color difference components) and YC_{b}Cᵣ space (where Y is a luminance component, C_{b} is a chrominance-blue component, and Cᵣ is a chrominance-red component). Data is processed in these spaces because a standard raw data stream, such as data in a Bayer pattern, is much more difficult to compress. Also, it is much more difficult to realize high levels of data compression unless done in a standard color space like YC_{b}Cᵣ. Thus, most compression algorithms use a preprocessing step of interpolating RGB (Red, Green, Blue) raw data into a standard color space, like YC_{b}Cᵣ, prior to applying an image data compression procedure.

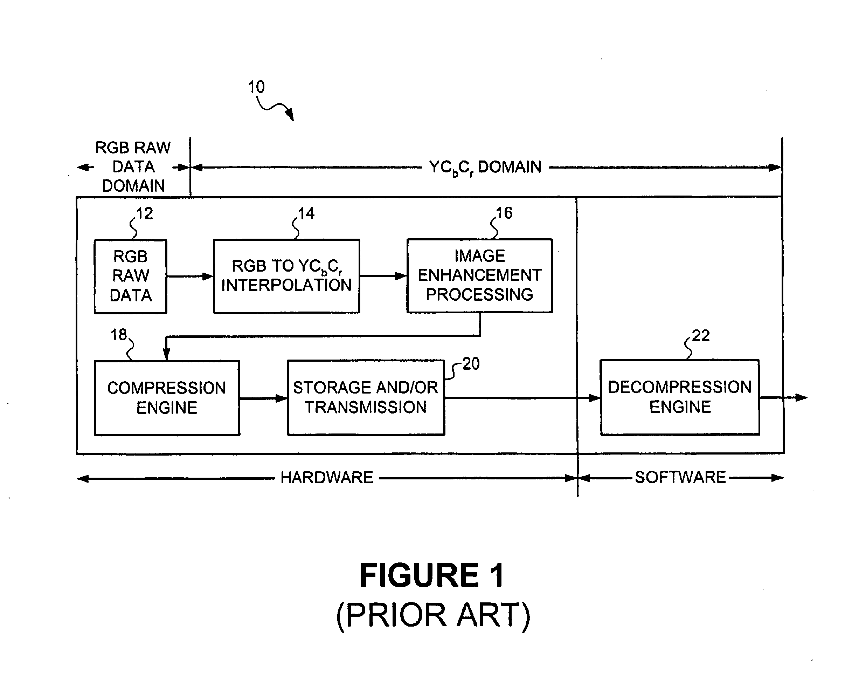

Figure 1 shows a flow diagram 10 illustrating this procedure. RGB raw data at a block 12 is preprocessed at an interpolation block 14 that interpolates the RGB raw data into a YC_{b}Cᵣ space. Hence, there is a mapping from the RGB raw data domain to the YC_{b}Cᵣ domain. From the interpolation block 14 and while in the YC_{b}Cᵣ domain, image enhancement is performed at a block 16, compression is performed by a compression engine at a block 18, and storage and/or transmission is performed at a block 20. At a block 22, a decompression engine decompresses the color image data. Software is typically used to perform the decompression at the block 22, while additional specialized hardware is usually used to perform the preprocessing interpolation at the block 14.

YC_{b}Cᵣ data typically comprises eight bits or more of luminance data, and eight bits or more of color data per pixel (*e.g*., the picture element). Raw RGB data usually comprises eight bits or more of luminance data per pixel, with the pixels arranged in a predetermined pattern, such as in a Bayer pattern. Image data compression is employed to reduce data storage requirements and/or to reduce the bandwidth or time required for transmission of image data from one location to another.

As shown by the block 16 of Figure 1, image enhancement processing algorithms usually preprocess YC_{b}Cᵣ data before compression is performed at the block 18, due to the requirement for compression algorithms to have fully interpolated color data to process. Although image enhancement is used to improve sharpness, color saturation, color rendition, and other image parameters, performing image enhancement on YC_{b}Cᵣ data can be difficult. For instance, due to the nature of YC_{b}Cᵣ and other color space data, YC_{b}Cᵣ image data is often devoid of much of the original color information that existed for each pixel prior to interpolation. This complicates the eventual reconstruction of the original image data and renders the achievement of high levels of image quality difficult, if not impossible, to obtain.

Accordingly, improvements are needed in the processing of color image data.

EP0907294A discloses an alternative image processing device, in which output signals of a predetermined number of pixels composed of a plurality of color components intermixed are rearranged into a set of unit blocks, each composed of output signal components of the same color. The rearranged image signals are encoded into fixed-length codes for each unit block. The image signals are stored in a coded image memory, and are read out and decoded into fixed-length form for each unit block. The decoded image signals are reversely rearranged to restore the original signals, which are stored in a frame memory.

US5734779 discloses a recording/reproducing system provided with an image pickup element comprising a color filter having a plurality of colors. An image pickup device compresses the color image information obtained from the image pickup element to provide compressed image information. A recording device records the compressed image information on a recording medium. A reproducing device extracts and expands the compressed image information from the recording medium. The image pickup device compresses the color image information for the respective colors of the color filter, and the reproducing device forms color video signals after expanding the color image information.

Whereas, EP0508607A discloses an electronic still camera including: a plurality of image pickup elements having color filters of a plurality of colors; a color separation unit for separating outputs from the image pickup elements into each color signal; an interpolation unit for receiving an output from the color separation unit and interpolating missing part of each color image data; an orthogonal transformation unit for dividing respective color image data interpolated by the interpolation unit into a plurality of blocks and performing orthogonal transformation, a coding unit for coding an output from the orthogonal transformation unit; and a storage unit for storing an output from the coding unit.

### SUMMARY OF THE INVENTION

A method maps an original color image pattern to a first color image pattern. Color image data of the first color image pattern is compressed and decompressed. The decompressed color image data is remapped into a second color image pattern that is substantially the same as the original color image pattern.

The present invention provides a method as set forth in claim 1.

### BRIEF DESCRIPTION OF THE DRAWINGS

Non-limiting and non-exhaustive embodiments of the present invention will be described in the following figures, wherein like reference numerals refer to like parts throughout the various views unless otherwise specified.
Figure 1 is a flow diagram illustrating known color image data processing and compression.
Figure 2 is a flow diagram illustrating color image data processing and compression method according to an embodiment of the invention.
Figures 3a-3e illustrate an embodiment of a mapping, compression, decompression, and remapping process that can be employed by the method of Figure 2.
Figures 4a-4g illustrate another embodiment of a mapping, compression, decompression, and remapping process that can be employed by the method of Figure 2.
Figure 5 shows an embodiment of an image sensor system that can implement the method and processes of Figures 2-4.

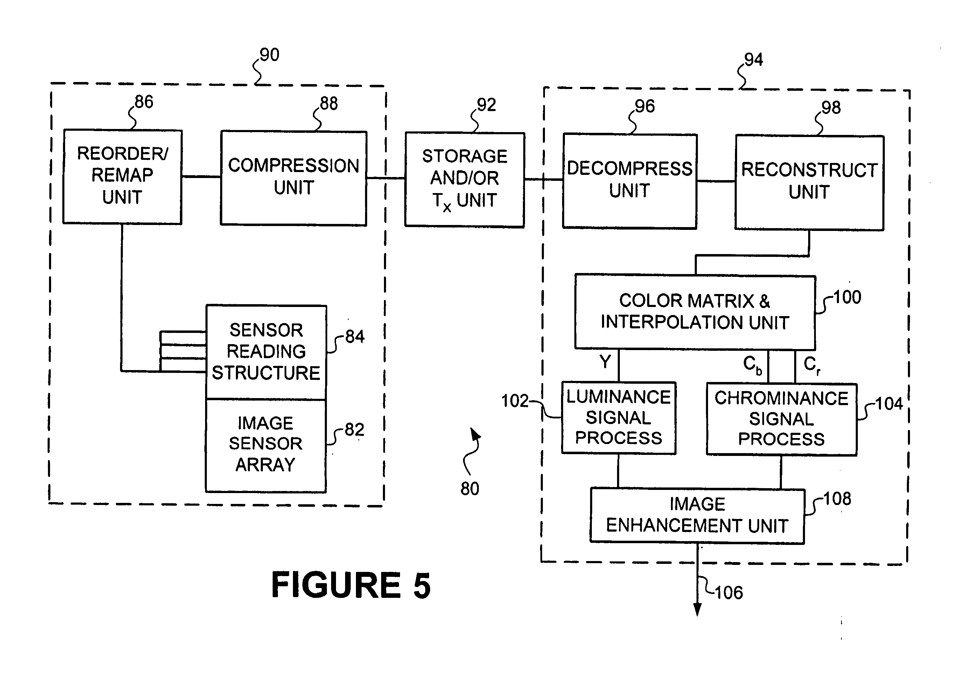

Embodiments of a method and apparatus for color image data processing and compression are described in detail herein. In the following description, numerous specific details are provided, such as the components of the hardware for color image processing in Figure 5, to provide a thorough understanding of embodiments of the invention. One skilled in the relevant art will recognize, however, that the invention can be practiced without one or more of the specific details, or with other methods, components, etc. In other instances, well-known structures or operations are not shown or described in detail to avoid obscuring aspects of various embodiments of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

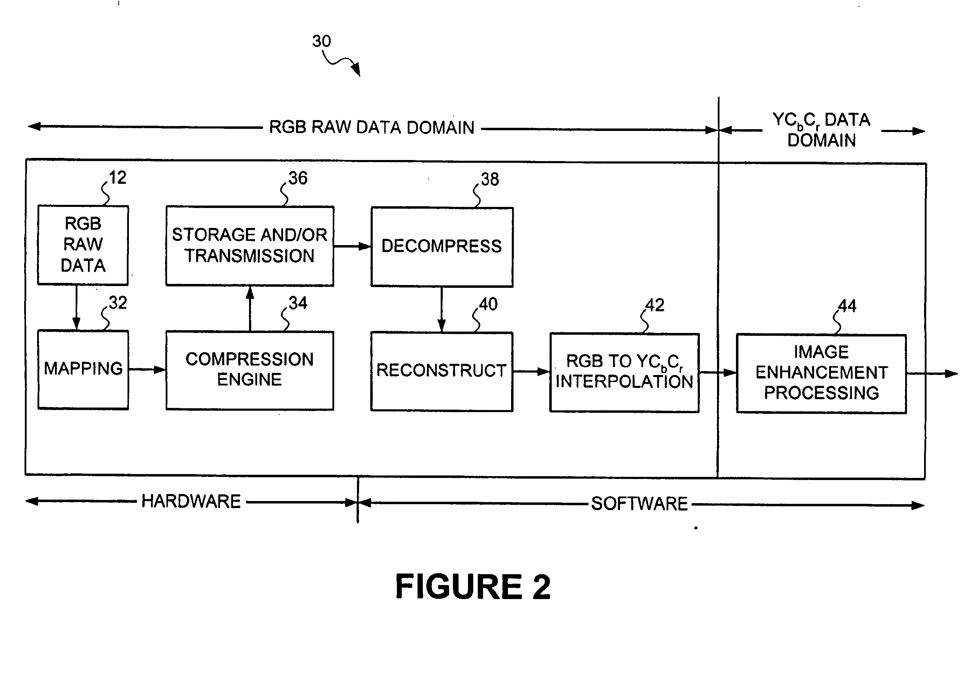

Figure 2 is a flow diagram 30 illustrating an embodiment of the present invention. Shown initially at the block 12 is a raw data source that provides image data, such as a RGB raw data source corresponding to a standard Bayer pattern. Although RGB data is described herein for illustrative purposes and for simplicity of explanation, it is understood that the block 12 may provide other color image data formats. For instance, the block 12 may be a CYM (Cyan, Yellow, Magenta) raw data source, CYWG (Cyan, Yellow, White, Green) raw data source, or any other color-coding schemes.

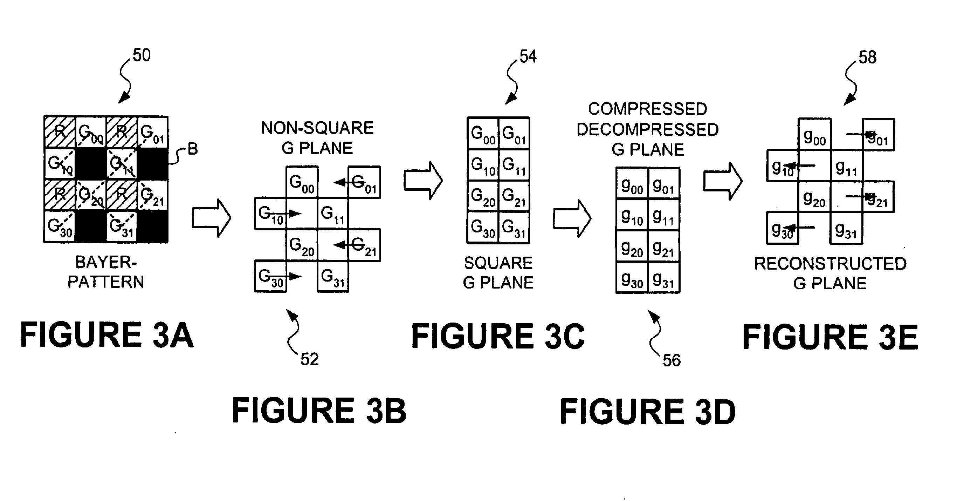

Next at a block 32, the pattern of the RGB raw data from the raw data source of the block 12 is reordered or reorganized by a mapping algorithm. This mapping will be described in further detail below with reference to Figure 3, and generally involves reordering non-square color patterns of the RGB raw data into color patterns that are more easily processed by standard compression algorithms.

At a block 34, the reordered RGB patterns are compressed by a compression engine, using a compression algorithm such as a JPEG-based algorithm, Discrete Cosine Transform (DCT)-based algorithm, or other suitable compression algorithms. Storage and/or transmission at a block 36 can subsequently follow the compression. Next at a block 38, the compressed data is decompressed into a facsimile of (or substantially the same as) the remapped/reordered RGB patterns that were present prior to compression at the block 34. The decompressed RGB patterns at the block 38 comprise most, if not all, of the original color information prior to compression.

At a block 40, the decompressed RGB patterns are remapped or reordered by a reconstruction algorithm. The reconstruction algorithm remaps the decompressed RGB patterns to represent the original RGB raw data pattern that was present prior to the block 32. Subsequently, the reconstructed RGB raw data can be interpolated to a YC_{b}Cᵣ space, for example, at a block 42. In another embodiment, interpolation to a YUV space can be performed at the block 42.

In addition (or as an alternative) to the interpolation at the block 42, image enhancement processing can be performed at the block 44. This image enhancement processing can include methods to improve sharpness, color saturation, color rendition, etc. Unlike the prior art methods previously described above, an embodiment of the invention makes image enhancement at the block 44 easier to perform and results in enhanced image quality, since much more of the original color content is maintained throughout the process represented in Figure 2.

As shown by the flow diagram 30 of Figure 2, the operations performed by the blocks 12 and 32-42 are done in the RGB raw data domain. That is, compression and decompression is performed in the RGB raw data domain, and interpolation from one color space to another color space (*e.g*., from RGB space to YC_{b}Cᵣ space) is not performed by an embodiment of the invention until after decompression at the block 38.

Similarly, image enhancement is not performed by an embodiment of the invention until after decompression at the block 38. This image enhancement at the block 44 can be performed in the YC_{b}Cᵣ domain, and results in the minimization of negative impacts on image quality brought about, in the prior art, by the loss of color information that occurs during interpolation from raw color image data into a standard color space.

Figures 3a-3e show an embodiment of the process performed by the blocks 12 and 32-40 of Figure 2. Beginning at Figure 3a, a standard RGB color pattern 50 is shown, although other color patterns, such as a CYM pattern, may be part of the raw data source. The pattern 50 can be embodied in a color filter that is arranged according to a Bayer pattern, for example, that filters and provides light according to the pattern arrangement. The pattern 50 comprises a checkerboard pattern having a plurality of red R, blue B, and green G elements.

Typically, the red R and blue B elements/planes are arranged in a square pattern, as shown in Figure 3a. As shown in Figure 3b, the green G elements/planes are usually arranged in a non-square pattern 52. Because most compression algorithms, such as those used by JPEG formats, typically perform the compression process on square patterns in the YC_{b}Cᵣ color space, an embodiment of the invention reorders or maps the non-square G-plane pattern 52 into a square G-plane pattern 54 of Figure 3c. That is, if the green G elements in the non-square pattern 52 are designated G₀₀-G₃₁, then the elements G₀₁, G₁₀, G₂₁, and G₃₀ are reordered such that the square G-plane configuration of Figure 3c is obtained. This can occur in the block 32 of Figure 2, for example.

Next, the data in the square G-plane pattern 54 can be compressed and decompressed, via the blocks 32-38 of Figure 2, to obtain the square pattern 56 of Figure 3d. The pattern 56 comprises most, if not all, of the data in the square G-plane pattern 54 of Figure 3c, and is designated as g₀₀-g₃₁ elements in Figure 3d. Figure 3e shows a non-square pattern 58 that is a reconstructed version of the pattern 56 of Figure 3d, where the g₀₁, g₁₀, g₂₁, and g₃₀ elements (representing the original G₀₁, G₁₀, G₂₁, and G₃₀ elements) are remapped or restored to their original locations. The block 40 of Figure 2 can perform this reconstruction after decompression.

With traditional compression algorithms, G-plane data is usually compressed into the Y luminance channel of a YC_{b}Cᵣ space, while R- and B-plane data is compressed into the Cᵣ and C_{b} chrominance channels, respectively. If raw RGB data is applied directly to the compression algorithm without interpolation, a large amount of image degradation in the form of compression artifacts often occurs upon decompression.

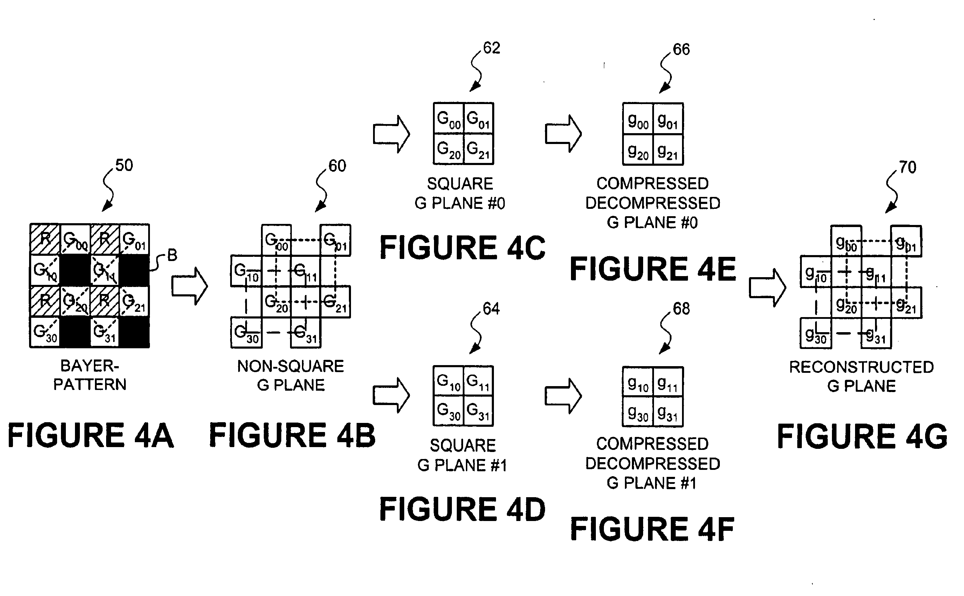

Accordingly, another mapping technique of an embodiment of the invention focuses on mapping or reordering the non-square G-plane data, prior to application of a compression algorithm, into multiple square G-planes. Specifically with reference first to Figure 4a, the green G elements in the RGB color pattern 50 are identified by G₀₀-G₃₁ designations. The green G elements/pixels G₀₀, G₀₁, G₂₀, and G₂₁ of the pattern 60 of Figure 4b, having even-numbered positions in the horizontal and vertical axes, and the green G elements/pixels G₁₀, G₁₁, G₃₀, and G₃₁ having odd-numbered positions in the horizontal and vertical axes are mapped to separate square G-planes. That is, the green G elements/pixels G₀₀, G₀₁, G₂₀, and G₂₁ are mapped to a square G-plane pattern 62 of Figure 4c, and the green G elements/pixels G₁₀, G₁₁, G₃₀, and G₃₁ are mapped to a square G-plane pattern 64 of Figure 4d. This mapping into two separate square G-planes (labeled G-plane #0 and G-plane #1) can be performed in the block 32 of Figure 2.

These even and odd G-planes are then compressed and decompressed as separate planes by the blocks 32-38, as represented by patterns 66-68 having g₀₀-g₃₁ element designations in Figures 4e-4f. After decompression, the two square G-planes #0 and #1 are repositioned or remapped by the block 40 to recreate substantially the original single non-square G-plane pattern 70 shown in Figure 4g. Because the two separate square G-planes, along with the square R and B planes, are applied to the compression algorithm separately, image degradation is dramatically reduced while much more of the original color content is preserved.

Figure 5 illustrates an image sensor system 80 that can implement the methods and processes shown in the previous figures and described above. As an initial consideration, color interpolation, image enhancement, and data compression of prior art methods, such as that illustrated in Figure 1, are typically accomplished with specialized hardware. As Figure 1 further illustrates, decompression is typically accomplished with a host computer and/or software.

In contrast, the embodiment of the image sensor system 80 of Figure 5 includes hardware to perform data mapping that is much simpler than the prior art hardware required for color interpolation and image enhancement. This results in hardware of reduced complexity and size. Furthermore; because an embodiment of the invention reserves color interpolation to a standard color space until data is present in the host system (*e.g.*, after decompression at the block 38 of Figure 2), color interpolation can be performed using the host computer and software. Similarly, image enhancement at the block 44 can be performed using the host computer and software. The overall result is a savings in the amount of specialized hardware required while improving the quality of the resulting image.

The image sensor system 80 comprises an image sensor array 82. The image sensor array 82 includes a plurality of light-sensing elements, along with one or more color filters arranged in a pattern, such as the RGB color pattern 50 of Figures 3a and 4a. Line signals from the image sensor array 82, corresponding to the different colors in the RGB color pattern 50, are provided to the sensor reading structure 84.

The sensor reading structure is, in turn, coupled via one or more lines to a reorder/remap unit 86, such that the reorder/remap unit receives a plurality of input signals corresponding to R-, G-, and B-plane color image data (*e.g.*, the RGB raw data). The reorder/remap unit 86 performs the reordering or remapping of the G-plane elements, for example, in a manner such as that shown in Figures 3c, 4c, and 4d. The reordered color image data is subsequently provided to a compression unit 88 that can utilize a suitable known compression algorithm and associated hardware to compress the reordered color image data. In one embodiment, the reorder/remap unit 86 and the compression unit 88 can comprise one or more digital signal processor (DSP) units.

According to one embodiment, the image sensor array 82, sensor reading structure 84, reorder/remap unit 86, and compression unit 88 are located on a single integrated circuit (IC) chip 90. In another embodiment, one or more of these components are not located on-board the IC chip 90, and instead can be located on other IC chips or as separate components in the image sensor system 80. Therefore, embodiments of the invention are not limited by the specific location of the components in the image sensor system 80.

The color image data compressed by the compression unit 88 can be stored in a storage and/or transmission unit 92. The storage and/or transmission unit 92 can comprise any type of suitable machine-readable storage media, including but not limited to, random access memory (RAM), floppy disk, hard disk, etc., and corresponding processing, communication, and transmission hardware that allows stored data to be retrieved and transmitted to other components in the image sensor system 80.

A host computer 94 (or software) can subsequently process the data stored in the storage and/or transmission unit 92. The host computer 94 comprises various hardware (including a processor) and software components, of which only a few are illustrated in Figure 5. In one embodiment, the host computer 94 is separate from the IC chip 90, while in another embodiment, one or more components of the host computer 94 may be on-board components in the IC chip 90. In yet another embodiment, a separate machine-readable medium can have a set of instructions, which when executed by one or more processors (not shown) effectuate the various processes and algorithms described above. Therefore, embodiments of the invention are not limited by the specific location (or location of execution) of the hardware or software components of the host computer 94.

The host computer 94 includes a decompression unit 96 and a reconstruction unit 98, both of which can be embodied in software, to perform the decompression and reconstruction processes previously described above. If interpolation is to be performed (*e.g.*, from an RGB space to a YC_{b}Cᵣ space, for example), a color matrix and interpolation unit 100 performs the interpolation, using known techniques. The resulting Y luminance data can be received by a luminance signal processing unit 102, and the resulting C_{b} and Cᵣ data can be received by a chrominance signal processing unit 104. The processing units 102 and 104 can then generate an output signal 106, or they can provide inputs to an image enhancement unit 108, which can intern perform image quality improvement operations on the color image data.

In summary, embodiments of the present invention provide improved color image data by performing a reordering prior to compression, compressing and decompressing the color image data, and then reconstructing the color image data to its original color pattern. Interpolation and/or image enhancement can be performed after the color image data is decompressed and reconstructed. The result is that much of the original color image data is preserved throughout the process.

The above description of illustrated embodiments of the invention is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description.

## Claims

1. A method, comprising:
receiving color image data, a subset of the image data being arranged in a non-square color image pattern;
mapping the subset of the image data from the non-square color image pattern to a plurality of overlapping planes having substantially square color image pattern;
individually compressing and decompressing color image data of each of the plurality of planes having the substantially square color image pattern and
remapping the decompressed color image data of the plurality of planes into another color image pattern substantially the same as the subset of the image data arranged in the non-square color image pattern.

2. The method of claim 1, further comprising:
interpolating the decompressed color image data of the plurality of planes from an RGB space to a YC_{b}Cᵣ color space; and
performing image enhancement processing on the interpolated color image data of the YC_{b}Cᵣ color space.

3. The method of claim 1, further comprising interpolating color image data of the another color image pattern from an RGB space to a YUV color space.

4. The method of claim 1, further comprising performing image enhancement processing on the decompressed color image data of the another color image pattern.

5. A image sensor system, comprising:
an image sensor unit to generate color image data, a subset of the color image data being arranged in a non-square color image pattern;
a reorder unit coupled to the image sensor unit to map the subset of non-square color image pattern into a plurality of overlapping planes each having substantially square color image pattern.
a compression/decompression unit coupled the reorder unit to individually compress and decompress color image data of the plurality of planes received from the reorder unit; and
a processor to effect a reconstruction of the decompressed color image data of the plurality of planes into a color image pattern substantially the same as the subset of non-square color image pattern.

6. The system of claim 5 wherein the processor comprises part of a host computer, the host computer including:
a reconstruction unit responsive to the processor to perform the reconstruction of the decompressed color image data; and
an interpolation unit to interpolate color image data of the third color image pattern from a first color space to a second color space.

7. The system of claim 5, further comprising an image enhancement unit to perform image enhancement on color image data of the third color image pattern.

8. The system of claim 5 wherein the image sensor unit and reorder unit are located on a same integrated circuit chip.

9. A machine-readable medium having stored thereon instructions, which if executed by one or more processors, cause the processors to effect the following:
map an original color image data having a subset arranged in a non-square pattern to a plurality of overlapping planes having substantially square color image pattern;
individually compress and decompress color image data of the plurality of planes; and
remap the decompressed color image data of the plurality of planes into a color image pattern substantially the same as the original color image pattern.

10. The machine-readable medium of claim 9 wherein the instructions cause the processor to further effect the following:
interpolate color image data of the second color image pattern from a first color space to a second color space.

11. The machine-readable medium of claim 9 wherein the instructions cause the processor to further effect the following:
perform image enhancement processing on the decompressed color image data of the second color image pattern.

## Patentansprüche

1. Verfahren, umfassend:
Empfangen von Farbbilddaten, wobei eine Teilmenge der Bilddaten in einer nicht-quadratischen Farbbildstruktur angeordnet ist,
Zuordnen der Teilmenge der Bilddaten von der nicht-quadratischen Farbbildstruktur zu einer Vielzahl an überlappenden Ebenen mit einer im Wesentlichen quadratischen Farbbildstruktur, und
individuelles Komprimieren und Dekomprimieren von Farbbilddaten jeder der Vielzahl an Ebenen mit der im Wesentlichen quadratischen Farbbildstruktur, und
Rück-Zuordnen der dekomprimierten Farbbilddaten der Vielzahl an Ebenen in eine weitere Farbbildstruktur, die im Wesentlichen gleich der Teilmenge der in der nicht-quadratischen Farbbildstruktur angeordneten Bilddaten ist.

2. Verfahren nach Anspruch 1, ferner umfassend:
Interpolieren der dekomprimierten Farbbilddaten der Vielzahl an Ebenen aus einem RGB-Raum zu einem YC_{b}Cᵣ-Farbraum; und
Durchführen einer Bildverbesserungsbearbeitung an den interpolierten Farbbilddaten des YC_{b}Cᵣ-Farbraums.

3. Verfahren nach Anspruch 1, ferner umfassend das Interpolieren von Farbbilddaten der weiteren Farbbildstruktur aus einem RGB-Raum zu einem YUV-Farbraum.

4. Verfahren nach Anspruch 1, ferner umfassend das Durchführen einer Bildverbesserungsbearbeitung an den dekomprimierten Farbbilddaten der weiteren Farbbildstruktur.

5. Farbsensorsystem, umfassend:
eine Bildsensoreinheit zur Erzeugung von Farbbilddaten, wobei eine Teilmenge der Farbbilddaten in einer nicht-quadratischen Farbbildstruktur angeordnet ist;
eine Umordnungseinheit, die mit der Bildsensoreinheit gekoppelt ist, um die Teilmenge der nicht-quadratischen Farbbildstruktur einer Vielzahl an überlappenden Ebenen zuzuordnen, wobei jede Ebene eine im Wesentlichen quadratische Farbbildstruktur hat;
eine Kompressions-/Dekompressionseinheit, die mit der Umordnungseinheit gekoppelt ist, um die Farbbilddaten der Vielzahl an Ebenen, die aus der Umordnungseinheit empfangen werden, individuell zu komprimieren und zu dekomprimieren; und
einen Prozessor zum Durchführen einer Rekonstruktion der dekomprimierten Farbbilddaten der Vielzahl an Ebenen in eine der Teilmenge der nicht-quadratischen Farbbildstruktur im Wesentlichen gleichen Farbbildstruktur.

6. System nach Anspruch 5, worin der Prozessor einen Teil eines Hostcomputers umfasst, wobei der Hostcomputer Folgendes umfasst:
eine Rekonstruktionseinheit, die auf den Prozessor responsiv ist, um die Rekonstruktion der dekomprimierten Farbbilddaten durchzuführen; und
eine Interpolationseinheit zur Interpolation der Farbbilddaten der dritten Farbbildstruktur von einem ersten Farbraum in einen zweiten Farbraum.

7. System nach Anspruch 5, ferner umfassend eine Bildverbesserungseinheit zur Durchführung einer Bildverbesserung an den Farbbilddaten der dritten Farbbildstruktur.

8. System nach Anspruch 5, worin die Bildsensoreinheit und die Umordnungseinheit auf dem gleichen integrierten Schaltungschip angeordnet sind.

9. Maschinenlesbares Medium mit auf diesem gespeicherten Anweisungen, die, wenn durch einen oder mehrere Prozessoren ausgeführt, bewirken, dass die Prozessoren das Folgende ausführen:
Zuordnen ursprünglicher Farbbilddaten mit einer in einer nicht-quadratischen Struktur angeordneten Teilmenge zu einer Vielzahl an überlappenden Ebenen mit in einer Wesentlichen quadratischen Farbbildstruktur;
Individuelles Komprimieren und Dekomprimieren von Farbbilddaten der Vielzahl an Ebenen; und
Rück-Zuordnen der dekomprimierten Farbbilddaten der Vielzahl an Ebenen zu einer Farbbildstruktur, die im Wesentlichen gleich der ursprünglichen Farbbildstruktur ist.

10. Maschinenlesbares Medium nach Anspruch 9, worin die Anweisungen bewirken, dass der Prozessor ferner Folgendes durchführt:
Interpolieren von Farbbilddaten der zweiten Farbbildstruktur von einem ersten Farbraum zu einem zweiten Farbraum.

11. Maschinenlesbares Medium nach Anspruch 9, worin die Anweisungen bewirken, dass der Prozessor ferner Folgendes durchführt:
Durchführen einer Bildverbesserungsverarbeitung an den dekomprimierten Farbbilddaten der zweiten Farbbildstruktur.

## Revendications

1. Procédé, comprenant les étapes consistant à :
recevoir des données d'images en couleur, un sous-ensemble des données d'images étant agencé selon un motif d'images en couleur non-carré ;
cartographier le sous-ensemble de données d'images à partir du motif d'images en couleur non-carré à une pluralité de plans de chevauchement ayant des motifs d'images en couleur sensiblement carrés ;
compresser et décompresser individuellement les données d'images en couleur de chacun de la pluralité de plans ayant le motif d'images en couleur sensiblement carré ; et
re-cartographier les données d'images en couleur décompressées de la pluralité de plans en un autre motif d'images en couleur qui est sensiblement le même que le sous-ensemble de données d'images agencé dans le motif d'images en couleur non-carré.

2. Procédé selon la revendication 1, comprenant en outre les étapes consistant à :
interpoler les données d'images en couleur décompressées de la pluralité de plans d'un espace RGB à un espace couleur YC_{b}Cᵣ ; et
exécuter un traitement d'enrichissement d'images des données d'images en couleur interpolées de l'espace couleur YC_{b}Cᵣ.

3. Procédé selon la revendication 1, comprenant en outre l'interpolation des données d'images en couleur de l'autre motif d'images en couleur d'un espace RGB à un espace couleur YUV.

4. Procédé selon la revendication 1, comprenant en outre l'exécution d'un traitement d'enrichissement d'images des données d'images en couleur décompressées de l'autre motif d'images en couleur.

5. Système de détection d'images comprenant :
une unité de détection d'images pour produire des données d'images en couleur, un sous-ensemble des données d'images en couleur étant agencé dans un premier motif d'images en couleur non-carré ;
une unité de classement couplée à l'unité de détection d'images pour cartographier le sous-ensemble du motif d'images en couleur non-carré en plusieurs plans de chevauchement ayant chacun un motif d'images en couleur sensiblement carré ;
une unité de compression/décompression couplée à l'unité de classement pour compresser et décompresser individuellement des données d'images en couleur de la pluralité de plans reçus de l'unité de classement ; et
un processeur pour effectuer une reconstruction des données d'images en couleur décompressées de la pluralité de plans en un motif d'images en couleur qui est sensiblement le même que le sous-ensemble du motif d'images en couleur non-carré.

6. Système selon la revendication 5, où le processeur comprend une partie d'un ordinateur hôte, l'ordinateur hôte incluant :
une unité de reconstruction réagissant au processeur pour exécuter la reconstruction des données d'images en couleur décompressées ; et
une unité d'interpolation pour interpoler des données d'images en couleur du troisième motif d'images en couleur d'un premier espace couleur à un second espace couleur.

7. Système selon la revendication 5, comprenant en outre une unité d'enrichissement d'images pour exécuter un enrichissement d'images sur des données d'images en couleur du troisième motif d'images couleur.

8. Système selon la revendication 5, où l'unité de détection d'images et l'unité de classement se situent sur la même puce de circuit intégré.

9. Support lisible par machine sur lequel sont stockées des instructions qui, si elles sont exécutées par un ou plusieurs processeurs, amènent les processeurs à effectuer ce qui suit :
cartographier les données d'images en couleur d'origine ayant un sous-ensemble agencé selon un motif non-carré à une pluralité de plans de chevauchement ayant un motif d'images en couleur sensiblement carré ;
compresser et décompresser individuellement des données d'images en couleur de la pluralité de plans ; et
re-cartographier les données d'images en couleur décompressées de la pluralité de plans dans un motif d'images en couleur qui est sensiblement le même que le motif d'images en couleur d'origine.

10. Support lisible par machine selon la revendication 9, où les instructions amènent le processeur à effectuer en outre ce qui suit :
interpoler des données d'images en couleur du deuxième motif d'images en couleur d'un premier espace couleur à un second espace couleur.

11. Support lisible par machine selon la revendication 9, où les instructions amènent le processeur à effectuer en outre ce qui suit :
exécuter un traitement d'enrichissement d'images sur les données d'images en couleur décompressées du deuxième motif d'images en couleur.
